# EUROPÄISCHE PATENTSCHRIFT

(11) **EP 2 401 138 B1**
(45) Veröffentlichungstag und Bekanntmachung des Hinweises auf die Patenterteilung: **21.01.2015**
(21) Anmeldenummer: 10709958.2
(22) Anmeldetag: 22.02.2010
(51) Int. Cl.: B29C 73/16, B29L 30/00, B65D 83/14

(54) **VORRICHTUNG ZUM AUSBRINGEN EINES FLIESSFÄHIGEN MEDIUMS**
DEVICE FOR OUTPUTTING A FREE-FLOWING MEDIUM
DISPOSITIF DE DISTRIBUTION D'UN MILIEU FLUIDE

(30) Priorität: 26.02.2009 DE 202009002661 U
(43) Veröffentlichungstag der Anmeldung: 04.01.2012
(73) Patentinhaber: Illinois Tool Works Inc., Glenview, IL 60025 (US)
(72) Erfinder: STEHLE, Michael, 88662 Überlingen (DE)
(74) Vertreter: Arat, Dogan
(86) Internationale Anmeldenummer: PCT/EP2010/001107
(87) Internationale Veröffentlichungsnummer: WO 2010/097195

(56) Entgegenhaltungen:
- EP-A2- 0 972 616
- WO-A1-2009/119317
- DE-U1- 20 213 003
- DE-U1-202007 000 679
- FR-A1- 2 753 653
- US-A1- 2008 098 855

## Beschreibung

Die Erfindung betrifft eine Vorrichtung zum Ausbringen von Reifendichtmittel, aus einem Behälter mit Hilfe von Druckmittel gemäss dem Oberbegriff von Anspruch 1.

### Stand der Technik

Derartige Vorrichtungen sind in vielfältiger Form und Ausführung auf dem Markt bekannt und erhältlich. Sie dienen in erster Linie zum Abdichten eines defekten Reifens bei Pannen und gleichzeitigem Aufpumpen des Reifens. Verwiesen wird bspw. hierzu auf die EP 0 753 420 A3 oder die DE 198 46 451, insbesondere auf die DE 199 48 706 A1.

Darauf soll jedoch die Erfindung nicht beschränkt sein. Sie soll überall dort eingesetzt werden können, wo ein flüssiges Medium auf Wunsch durch Druck von einem Druckerzeuger oder aus einem Druckspeicher in einen Raum ausgebracht wird.

Aus der DE 20 2007 000 679 U1 ist eine Einrichtung zum Zuführen von Dichtungsflüssigkeit in einen Luftreifen bekannt. Diese Einrichtung weist eine Isolierbox von quaderförmiger Gestalt auf. Sie besitzt eine zylindrische Aussparung, in der eine Aerosol-Reifendichtmittelflasche enthalten ist. An der Flasche befindet sich im oberen Bereich ein manuell zu betätigendes Ventil sowie je ein Anschlussschlauch, der mit dem Ventil eines zu befüllenden Reifens verbunden wird.

Des weiteren zeigt die DE 202 13 003 U einen Rahmenblock, der Elemente eines Reifenreparatursets aufnehmen kann, wie beispielsweise Kompressor und Flasche für Reifendichtmittel.

Eine Vorrichtung der eingangs erwähnten Art ist aus der US-A 2008/098855 bekannt. Diese offenbart den Oberbegriff des Anspruchs 1.

### Aufgabe

Aufgabe der vorliegenden Erfindung ist es, eine Vorrichtung der o. g. Art zu schaffen, welche nur einen geringen Platz in Anspruch nimmt und preisgünstiger ist.

### Lösung der Aufgabe

Zur Lösung dieser Aufgabe führten die kennzeichnenden Merkmale von Aspruch 1.

Vor allem ist wichtig, dass ein leichter Zugriff auf den Behälter ermöglicht ist. Ferner kann z. B., wenn der Behäfter durchsichtig ausgebildet ist, festgestellt werden, ob und wie viel Dichtmittel in dem Behälter noch vorhanden ist. Des weiteren besteht die Möglichkeit, auf den Behälter ein Haltbarkeitsdatum sichtbar aufzubringen bzw. das Datum sichtbar anzubringen.

Bevorzugt soll die Ausnehmung in eine Unterfläche des Gehäuses eingeformt sein. Dies soll aber nicht bedeuten, dass die Ausnehmung nicht auch an jeder anderen beliebigen Stelle vorgesehen werden kann. Die Unterfläche hat nur den Vorteil, dass das Einbringen der Ausnehmung erleichtert und insgesamt der Bauraum zur Aufnahme des Behälters minimiert sein kann.

Die Ausnehmung ist halbschalenartig ausgebildet, wobei an die Ausnehmung Eingriffsmulden angrenzen, um einen besseren Zugriff zu dem Behälter zu erlauben.

Dem Behälter ist zum Herstellen seiner Funktionalität ein Verteilerkopf zugeordnet. Dieser Verteilerkopf dient dazu, den Behälter zum einen mit dem Druckerzeuger bzw. Druckspeicher und zum anderen mit dem Raum zu verbinden, in den das Dichtmittel einfliessen soll. Hierzu sind entsprechende Schläuche bzw. Schlauchstücke vorgesehen, für die separate Ausnehmungen in dem Gehäuse vorgesehen sind.

Besonders bevorzugt wird, dass der Behälter selbst aus Metall geformt ist. Hier kann Aluminium zu bevorzugen sein, welches dem Behälter eine sehr elegante Form gibt, vor allem, wenn der Behälter im wesentlichen zylindrisch ausgebildet ist.

Für einen Kfz-Reifen genügt es, wenn der Behälter etwa 100 ml an Dichtmittel aufnehmen kann. Dementsprechend kann der Behälter selbst sehr klein ausgebildet werden. Sollte die erfindungsgemässe Vorrichtung jedoch für das Befüllen von kleineren Räumen anwendbar sein, so genügt es auch einen kleineren, sprich kürzeren, Behälter auszubilden, der bspw. 60 ml aufnehmen kann und in der erwähnten Ausnehmung in der Unterfläche des Gehäuses eingesetzt wird.

Bevorzug wird Schutz für einen Behälter aus Metall vor allem in zylindrischer Form begehrt. Bei diesem Behälter kann auch der Verteilerkopf erfindungsgemäss Besonderheiten aufweisen. Normalerweise steht das Schlauchstück mit dem Drehstück etwa waagrecht oder schräg von dem Behälter ab. Dies erfordert eine gesonderte Ausnehmung in der Unterfläche des Gehäuses. Deshalb ist daran gedacht, dieses Schlauchstück abknickbar auszugestalten, so dass es um den Verteilerkopf gewickelt werden kann. In diesem Fall weist der Verteilerkopf ebenfalls eine Ringnut auf, in die das Schlauchstück mit dem Drehstück eingelegt werden kann. Ein Anschlussnippel an dem Verteilerkopf für einen Schlauch zum Kompressor kann dann bspw. nicht seitlich sondern stirnwärtig dem Verteilerkopf zugeordnet werden.

Um eine geschlossene Einheit zu erhalten, kann in letztgenanntem Fall auch der Verteilerkopf zusätzlich mit einer Abdeckkappe geschlossen werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen Vorrichtung zum Ausbringen eines fliessfähigen Mediums;
Figur 2 eine Unteransicht der Vorrichtung gemäss Figur 1.

Eine erfindungsgemässe Vorrichtung zum Ausbringen eines fliessfähigen Mediums, insbesondere eines Reifendichtmittels, weist ein Gehäuse 1 auf, in dem sich, nicht näher gezeigt, ein Kompressor zur Erzeugung eines Druckes befindet. Dieser Kompressor wird durch einen Kippschalter 2 in Gang gesetzt, ein entsprechender Druck wird durch eine Anzeige 3 überwacht. Ein Druckknopf 4 dient bspw. zum Ablassen eines Druckes.

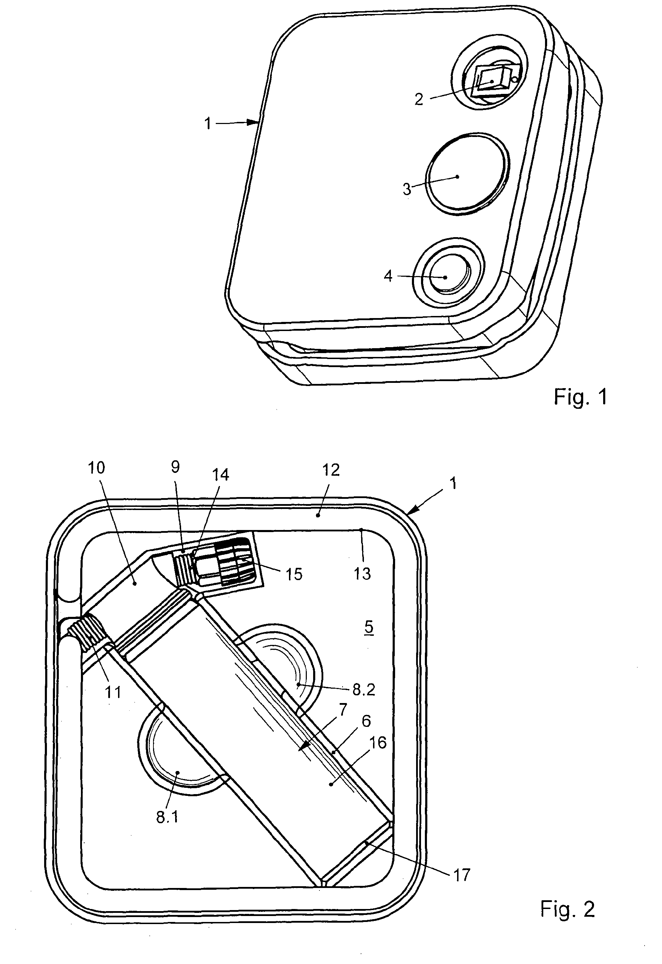

In eine Unterfläche 5 des Gehäuses 1 sind gemäss Figur 2 Ausnehmungen eingeformt. Diese Ausnehmungen sind insgesamt halbschalenartig ausgebildet und dienen verschiedenen Zwecken. Eine etwa diagonal verlaufende Ausnehmung 6 ist einem in Längsrichtung geschnittenen Zylinder nachgeformt. Diese Ausnehmung 6 dient der Aufnahme eines zylinderförmigen Behälters 7, in dem sich das fliessfähige Medium, insbesondere das Reifendichtmittel, befindet. Um den Behälter 7 aus der Ausnehmung 6 entnehmen zu können, sind entsprechende Griffmulden 8.1 und 8.2 vorgesehen.

An die Ausnehmung 6 schliesst eine Ausnehmung 9 mit entsprechenden Seitenverzweigungen zur Aufnahme eines Verteilerkopfes 10 an, wobei der Verteilerkopf 10 dem Behälter 7 aufgesetzt ist. Der Verteilerkopf 10 besitzt einen Anschlussnippel 11 zum Verbinden mit einem Schlauch 12, wobei der Schlauch 12 in eine Ringnut 13 eingelegt ist, die ebenfalls der Unterfläche 5 des Gehäuses 1 eingeformt ist.

Ferner ist der Verteilerkopf 10 mit einem Schlauchstück 14 verbunden, an welches ein Drehstück 15 zum Anschliessen an einen Ventilnippel von bspw. einem Fahrzeugreifen vorgesehen ist.

Die Funktionsweise der vorliegenden Erfindung ist folgende:
Befindet sich in dem Behälter 7 ein Reifendichtmittel, so dient die gesamte Vorrichtung als Pannenset bei einem Defekt eines Fahrzeugreifens. Tritt dieser Defekt auf, so wird der Behälter 7, der aus einem Behältermantel 16 und einem Behälterboden 17 besteht, aus der Ausnehmung 6 genommen, ebenso der Schlauch 12 aus der Ringnut 13. Ein freies Ende des Schlauches 12 wird mit dem Anschlussnippel 11 verbunden, während das Drehstück 15 auf einen Ventilnippel des defekten Fahrzeugreifens aufgeschraubt wird.

Nunmehr wird der Kompressor in dem Gehäuse 1 durch Betätigen des Kippschalters 2 in Gang gesetzt, so dass Druckluft über den Schlauch 12 in den Behälter 7 gepumpt wird. Diese Druckluft bewirkt ein Ausdrücken des Reifendichtmittels durch das Schlauchstück 14 und das Drehstück 15 in den Fahrzeugreifen. Dabei kann sich ggf. in dem Behälter 7 noch ein entsprechendes Steigrohr befinden, wie dies nach dem Stand der Technik bekannt ist.

Der Behälter 7 besteht bevorzugt aus einem Metall, insbesondere aus Aluminium und ist zylinderförmig ausgestaltet. Er nimmt etwa 100 ml an Reifendichtmittel auf, was für eine einmalige Anwendung des Reifendichtmittels bei einem defekten Reifen auf jeden Fall ausreicht. Sollte der Pannenset bzw. die erfindungsgemässe Vorrichtung auch für andere Zwecke angewendet werden, wie bspw. zum Reparieren eines Fahrradreifens, so genügt eine geringere Menge an Reifendichtmittel, so dass bspw. auch ein kürzerer Behälter in die entsprechende Ausnehmung 6 eingesetzt werden kann. Dieser Behälter soll dann bspw. 60 ml aufnehmen.

Nach einem einmaligen Gebrauch kann der leere Behälter 7 entsorgt und durch einen neuen, gefüllten Behälter ersetzt werden. Dies erspart wesentlich Kosten und verringert auch die Gefahr, dass ein Reifendichtmittel in einem bereits benutzten Behälter unbrauchbar wird, ohne dass es der Benutzer bemerkt. Das schlanke, metallische Design der zylindrischen Behälter spricht im übrigen vor allem auch weibliche Benutzer an.

**Bezugszeichenliste**

| | | | | | |
|---|---|---|---|---|---|
| 1 | Gehäuse | 34 | | 67 | |
| 2 | Kippschalter | 35 | | 68 | |
| 3 | Anzeige | 36 | | 69 | |
| 4 | Druckknopf | 37 | | 70 | |
| 5 | Unterfläche | 38 | | 71 | |
| 6 | Ausnehmung | 39 | | 72 | |
| 7 | Behälter | 40 | | 73 | |
| 8 | Griffmulde | 41 | | 74 | |
| 9 | Ausnehmung | 42 | | 75 | |
| 10 | Verteilerkopf | 43 | | 76 | |
| 11 | Anschlussnippel | 44 | | 77 | |
| 12 | Schlauch | 45 | | 78 | |
| 13 | Ringnut | 46 | | 79 | |
| 14 | Schlauchstück | 47 | | | |
| 15 | Drehstück | 48 | | | |
| 16 | Behältermantel | 49 | | | |
| 17 | Behälterboden | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Ausbringen von Reifendichtmittel, aus einem Behälter (7) mit Hilfe von Druckmittel, erzeugt durch einen Druckmittelerzeuger oder aus einem Druckmittelspeicher, der in einem Gehäuse (1) angeordnet ist, wobei das Gehäuse (1) zumindest eine Ausnehmung (6) aufweist, in die der Behälter (7) bevorzugt sichtbar eingelegt ist, und ein Teil der Ausnehmung (6) zur Aufnahme eines Verteilerkopfs (10) auf dem Behälter (1) ausgebildet ist, wobei der Verteilerkopf (10) einen Anschluss (11) an einen Schlauch (12) zum Anschliessen an den Druckerzeuger oder Druckspeicher aufweist und über ein Schlauchstück (14) an einen Ventilnippel anschliessbar ist und in das Gehäuse (10) Ausnehmungen bzw. eine Ringnut (13) zur Aufnahme des Schlauchs (12) bzw. Schlauchstücks (14) eingeformt sind,
**dadurch gekennzeichnet,**
**dass** die Ausnehmung (6) halbschalenartig ausgebildet ist und zum Entnehmen des Behälters (1) Griffmulden (8.1 und 8) vorgesehen sind.

2. Vorrichtung nach Anspruch 1, **dadurch gekennzeichnet, dass** die Ausnehmung (6) in einer Unterfläche (5) des Gehäuses (1) eingeformt ist.

3. Vorrichtung nach Anspruch 1 oder 2, **dadurch gekennzeichnet, dass** der Behälter (7) aus einem Metall, insbesondere aus Aluminium, geformt ist.

4. Vorrichtung nach Anspruch 3, **dadurch gekennzeichnet**, das der Behälter (7) im wesentlichen zylindrisch ausgebildet ist.

5. Vorrichtung nach einem der vorhergehenden Ansprüche, **dadurch gekennzeichnet, dass** zumindest eine Behälterwand (16) aus einem Metall, insbesondere aus Aluminium, besteht und die Behälterwand (1) im wesentlichen zylindrisch ausgebildet und ihr ein Verteilerkopf (10) aufgesetzt ist, wobei an den Verteilerkopf (10) ein Schlauchstück (14) zum Anschluss an einen Ventilnippel angesetzt ist.

6. Vorrichtung nach Anspruch 5, **dadurch gekennzeichnet, dass** das Schlauchstück (14) von einer etwa waagerechten Gebrauchslage um den Verteilerkopf (10) wickelbar ist.

7. Vorrichtung nach Anspruch 6, **dadurch gekennzeichnet, dass** der Verteilerkopf (10) eine zumindest teilringförmige Ausnehmung zur Aufnahme des Schlauchstücks (14) aufweist, wobei gegebenenfalls auf den Verteilerkopf (10) eine Abdeckkappe aufsetzbar ist.

## Claims

1. Device for outputting tyre sealing agent from a container (7) with the aid of pressure medium, generated by a pressure-medium generator or from a pressure-medium accumulator which is arranged in a housing (1), the housing (1) having at least one recess (6), into which the container (7) is introduced preferably visibly, and part of the recess (6) being designed for the reception of a distributor head (10) on the container (1), the distributor head (10) having a connection (11) to a hose (12) for connecting to the pressure generator or pressure accumulator and being connectable to a valve nipple via a hose piece (14), and recesses or an annular groove (13) for the reception of the hose (12) or hose piece (14) being integrally formed into the housing (10),
**characterized**
**in that** the recess (6) is designed in the manner of a half-shell, and recessed grips (8.1 and 8) are provided for the removal of the container (1).

2. Device according to Claim 1, **characterized in that** the recess (6) is integrally formed in a bottom face (5) of the housing (1).

3. Device according to Claim 1 or 2, **characterized in that** the container (7) is formed from a metal, in particular from aluminium.

4. Device according to Claim 3, **characterized in that** the container (7) is of essentially cylindrical form.

5. Device according to one of the preceding claims, **characterized in that** at least one container wall (16) is composed of a metal, in particular of aluminium, and the container wall (1) is of essentially cylindrical form and a distributor head (10) is placed on it, a hose piece (14) for connecting to a valve nipple being attached to the distributor head (10).

6. Device according to Claim 5, **characterized in that** the hose piece (14) can be wound around the distributor head (10) from an approximately horizontal position of use.

7. Device according to Claim 6, **characterized in that** the distributor head (10) has an at least part-annular recess for the reception of the hose piece (14), if appropriate a cover cap being capable of being placed onto the distributor head (10).

## Revendications

1. Dispositif pour distribuer un agent d'étanchéité pour pneu à partir d'un récipient (7), à l'aide d'un moyen de pression, produit par un générateur de moyen de pression ou à partir d'un accumulateur de moyens de pression, qui est disposé dans un boîtier (1), le boîtier (1) présentant au moins un évidement (6) dans lequel le récipient (7) est introduit de préférence de manière visible, et une partie de l'évidement (6) étant prévue pour recevoir une tête de distribution (10) sur le récipient (1), la tête de distribution (10) présentant un raccord (11) à un tuyau souple (12) pour le raccord au générateur de pression ou à l'accumulateur de pression et pouvant être raccordée par le biais d'un segment de tuyau souple (14) à un raccord fileté de soupape et des évidements ou une rainure annulaire (13) étant formés dans le boîtier (10) pour recevoir le tuyau souple (12) ou le segment de tuyau souple (14),
**caractérisé en ce que**
l'évidement (6) est réalisé en forme de demi-coque et des creux de préhension (8.1 et 8) sont prévus pour retirer le récipient (1).

2. Dispositif selon la revendication 1, **caractérisé en ce que** l'évidement (6) est formé dans une surface inférieure (5) du boîtier (1).

3. Dispositif selon la revendication 1 ou 2, **caractérisé en ce que** le récipient (7) est formé en métal, en particulier en aluminium.

4. Dispositif selon la revendication 3, **caractérisé en ce que** le récipient (7) est réalisé de manière essentiellement cylindrique.

5. Dispositif selon l'une quelconque des revendications précédentes, **caractérisé en ce qu'**au moins une paroi de récipient (16) se compose de métal, en particulier d'aluminium, et la paroi de récipient (1) est réalisée sous forme essentiellement cylindrique et une tête de distribution (10) est posée sur celle-ci, un segment de tuyau souple (14) étant placé sur la tête de distribution (10) en vue du raccordement à un raccord fileté de soupape.

6. Dispositif selon la revendication 5, **caractérisé en ce que** le segment de tuyau souple (14) peut être enroulé autour de la tête de distribution (10) à partir d'une position d'utilisation approximativement horizontale.

7. Dispositif selon la revendication 6, **caractérisé en ce que** la tête de distribution (10) présente un évidement de forme au moins partiellement annulaire pour recevoir le segment de tuyau souple (14), un capuchon de recouvrement pouvant éventuellement être posé sur la tête de distribution (10).
